# EUROPÄISCHE PATENTSCHRIFT

(11) **EP 4 137 247 B1**
(45) Veröffentlichungstag und Bekanntmachung des Hinweises auf die Patenterteilung: **31.01.2024**
(21) Anmeldenummer: 22190348.7
(22) Anmeldetag: 15.08.2022
(51) Int. Cl.: B21J 9/02, B21K 1/46, B21K 1/56, B21K 1/58, B21F 23/00

(54) **VERFAHREN UND SYSTEM ZUR HERSTELLUNG VON FORMTEILEN MITTELS MEHRSTUFENPRESSEN**
METHOD AND SYSTEM FOR THE MANUFACTURE OF SHAPED PARTS BY MEANS OF MULTI-STAGE PRESSING
PROCÉDÉ ET SYSTÈME DE FABRICATION DE PIÈCES DE FORMES AU MOYEN DE PRESSES MULTI-ÉTAGES

(30) Priorität: 19.08.2021 DE 102021209143
(43) Veröffentlichungstag der Anmeldung: 22.02.2023
(73) Patentinhaber: WAFIOS Umformtechnik GmbH, 42369 Wuppertal (DE)
(72) Erfinder: Reichelt, Christoph, 42349 Wuppertal (DE)
(74) Vertreter: Patentanwälte Ruff, Wilhelm, Beier, Dauster & Partner mbB

(56) Entgegenhaltungen:
- DE-A1- 10 332 655
- DE-B4-102017 207 585
- JP-A- S62 259 634
- US-A- 5 081 732

## Beschreibung

### ANWENDUNGSGEBIET UND STAND DER TECHNIK

Die Erfindung betrifft ein Verfahren und ein System zur Herstellung von Umformteilen aus Draht mittels einer Mehrstufenpresse, insbesondere zur Herstellung von Schrauben oder Nieten aus Drahtabschnitten.

Zur effizienten und hochpräzisen Herstellung von Befestigungselementen (wie z.B. Schrauben, Nägeln, Nieten) aus metallischem Draht werden heutzutage überwiegend Drahtumformmaschinen verwendet, die mit kalten oder vorgewärmten Drähten arbeiten. Drahtumformmaschinen sind Werkzeugmaschinen, die mit Hilfe geeigneter Werkzeuge aus Draht in einem automatischen Fertigungsprozess kleinere oder größere Serien von Umformteilen überwiegend durch Umformen erzeugen können.

Eine Mehrstufenpresse der in dieser Anmeldung betrachteten Art (z.B. DE 10 2017 207585 B4, welche die Basis für den Oberbegriff der Ansprüche 1 und 7 bildet) umfasst ein Einzugssystem zum taktweisen Einziehen von Draht von einem Drahtvorrat und zum Fördern des Drahts zu einem Schnittsystem, ein Schnittsystem zum taktweisen Abtrennen von Drahtabschnitten von dem zugeführten Draht und ein Zubringersystem zum Greifen jeweils eines abgetrennten Drahtabschnitts im Takt der Maschine und zum Zuführen des Drahtabschnitts in den Arbeitsbereich der Umformwerkzeuge. Im Umformbereich sind mehrere (d.h. zwei oder mehr) Umformstationen mit Umformwerkzeugen zum mehrstufigen Umformen des Drahtabschnitts untergebracht. Es werden mehrere Umformoperationen nacheinander ausgeführt, um aus dem zunächst meist zylindrischen Drahtabschnitt vorgegebener Länge durch mehrstufiges Pressen ein Umformteil zu erzeugen, das einen Schaftabschnitt und einen gegenüber dem Schaftabschnitt verbreiterten Kopfabschnitt aufweist. Die fertig gepressten Umformteile werden dann mithilfe eines Auswerfersystems der Umformpresse Teil für Teil taktweise ausgeworfen.

Bei Doppeldruckpressen umfassen die Umformoperationen genau eine Vorstauch-Operation und genau eine nachfolgende Fertigstauch-Operation. Bei anderen Mehrstufenpressen können drei oder mehr Umformstationen für drei, vier oder mehr Umformoperationen vorgesehen sein.

Manche Umformteile sind nach Verlassen der Umformpresse gebrauchsfertig geformt, da die aus der Umformpresse kommende Gestalt der Gestalt im bestimmungsgemäßen Gebrauch entspricht. Sie können somit versandfertig gemacht werden. Bei anderen Fertigungsprozessen schließen sich Folgebearbeitungen (eine oder mehrere) an. Bei der Fertigung mancher Schrauben werden die Umformteile beispielsweise danach zu einer Walzmaschine transportiert, um im Schaftabschnitt das Gewinde zu formen.

In jedem Fall müssen die ausgeworfenen Umformteile aus dem Bereich der Umformmaschine abtransportiert werden. Dazu ist in der Regel unterhalb des Umformbereichs bzw. unterhalb des Auswerfersystems eine Transporteinrichtung mit einem Förderband oder eine Rutsche vorgesehen, die die ausgeworfenen und herabgefallenen Umformteile sammelt und von der Umformmaschine wegtransportiert. Sollen Schrauben gefertigt werden, werden die aus der Umformpresse kommenden Rohteile dann z.B. in Behältern gesammelt, via Stapler zu einer Waschanlage transportiert, von eventuell anhaftendem Maschinenöl befreit, um dieses nicht in Folgeprozesse zu verschleppen, und danach mittels Stapler zur Walzmaschine transportiert, um die Gewinde zu erzeugen. Pressteile können beim Transport auch verklemmen oder beschädigt werden, was später zu Produktvermischungen oder Problemen bei Folgebearbeitungen führen kann.

### AUFGABE UND LÖSUNG

Es ist eine Aufgabe der Erfindung, ein Verfahren und ein System zur Herstellung von Umformteilen aus Draht, wie z.B. Schrauben, Nieten, Nägeln o.dgl., mittels einer Mehrstufenpresse bereitzustellen, die im Vergleich zu herkömmlichen Verfahren und Systemen bei hoher Ausbringungsleistung eine kostengünstige und ressourcenschonendere Herstellung von Umformteilen höchster Qualität ermöglichen.

Zur Lösung dieser Aufgabe stellt die Erfindung ein Verfahren mit den Merkmalen von Anspruch 1 bereit. Weiterhin wird ein System mit den Merkmalen von Anspruch 7 bereitgestellt. Vorteilhafte Weiterbildungen sind in den abhängigen Ansprüchen angegeben. Der Wortlaut sämtlicher Ansprüche wird durch Bezugnahme zum Inhalt der Beschreibung gemacht.

Gemäß der beanspruchten Erfindung wird ein pneumatisches Fördersystem zum kontrollierten Abtransportieren fertiger Umformteile bereitgestellt. Das Fördersystem umfasst ein Transportrohr, das eine Einführöffnung zum sukzessiven Aufnehmen fertiger Umformteile aufweist. Bei fertig installiertem Fördersystem ist die Einführöffnung des Transportrohrs derart in der Nähe des Auswerfersystems angeordnet, dass die fertigen Umformteile mittels des Auswerfersystems unmittelbar und lageorientiert zu mindestens einem Teil ihrer Länge in die Einführöffnung eingeführt werden können. Während des produktiven Fertigungsbetriebs werden die fertigen Umformteile dann mithilfe des Auswerfersystems in das Transportrohr taktweise sukzessive eingeführt. Der Begriff "lageorientiert" bedeutet hier insbesondere, dass die Umformteile nicht in beliebigen Orientierungen unkontrolliert bereitgestellt werden, sondern im Übergabebereich mit definierter Orientierung dem Transportrohr zugeführt bzw. zur Übernahme übergeben werden. Die Längsrichtung der Umformteile ist dabei im Wesentlichen parallel zur Längsrichtung des Transportrohrs orientiert.

Die in das Transportrohr wenigstens zu einem Teil ihrer Länge eingeführten Umformteile werden durch Einsaugen in das Transportrohr übernommen und dann durch das Transportrohr hindurch in Richtung wenigstens einer Folgestation pneumatisch abtransportiert. Die Einführöffnung fungiert also auch als Ansaugöffnung. Das Fördersystem und das Auswerfersystem der Umformmaschine sind somit aneinander angepasst, um bei einer Übergabe zusammenzuwirken. Das Auswerfersystem ist dazu konfiguriert, während des produktiven Betriebs Umformteile zur Übernahme durch das Fördersystem taktweise durch die Einführöffnung in das Transportrohr wenigstens teilweise einzuführen. Das Fördersystem ist dazu konfiguriert, das vom Auswerfersystem übernommene Umformteil im Bereich der Einführöffnung anzusaugen bzw. einzusaugen und pneumatisch durch das Transportrohr hindurch in Richtung einer Folgestation zu fördern.

Der Begriff "Transportrohr" soll hier sowohl für in sich starre rohrförmige Transporteinrichtungen als auch für biegsame Transportrohre stehen, wie zum Beispiel für biegsame Schläuche. Der transportwirksame Querschnitt des Transportohres ist vorzugsweise kreisrund (Zylinderrohr), aber auch von der Kreisform abweichende Querschnittsformen sind möglich, z.B. polygonale Querschnittsformen, wie z.B. bei Rechteckrohren oder Sechseckrohren. Ein Transportrohr kann in Längsrichtung bzw. Transportrichtung gesehen mehrere ggf. unterschiedlich gestaltete Rohrabschnitte aufweisen, z.B. gerade Abschnitte und gekrümmte Abschnitte.

Pneumatische Fördersysteme, also Fördersysteme, die mit Pneumatik arbeiten, funktionieren mittels Unterdrucks und Überdrucks eines gasförmigen Förderfluids. In der Regel wird Luft als fluides Fördermedium verwendet. Eingesetzt werden solche Systeme zum Beispiel in den Nahrungs-, Pharma-, Chemie-, und Kunststoffbranche. In denjenigen Bereichen einer Transportstrecke, in welchen der Transport mittels Überdrucks erfolgt, wird das zu transportierende Gut durch die Rohrleitung geblasen. Wenn mit Unterdruck gearbeitet wird, wird das Transportgut durch die Rohrleitung gesaugt.

Die Erfindung schlägt abweichend von diesen üblichen Nutzungsfeldern die Verwendung eines pneumatischen Fördersystems in speziellen Fällen der Fertigungstechnik von durch mehrstufiges Pressen erzeugten Pressteilen vor, um dort erkannte spezifische Probleme abzumildern oder zu vermeiden.

Gemäß der beanspruchten Erfindung ist die Konfiguration so getroffen, dass im Bereich der Einführöffnung des Transportrohrs, also an der Rohreingangsseite, während des Betriebs im Vergleich zum Umgebungsdruck ein Unterdruck herrscht, so dass die durch das Auswerfersystem kontrolliert übergegebenen Umformeile, wenn Sie eine geeignete Einführtiefe in das Transportrohr erreicht haben, mittels Unterdrucks, also durch Einsaugen, aktiv in das Transportrohr übernommen werden.

Dieses Konzept hat gerade im Zusammenhang mit hochproduktiv arbeitenden Umformmaschinen erhebliche Vorteile. Aufgrund der direkten Übergabe vom Auswerfer zum Transportrohr können die Pressteile im Wesentlichen ölfrei aus der Umformmaschine transportiert werden, da sie nach Verlassen des Auswerfers nicht mehr mit Öl in Kontakt kommen. Ein Waschen der Pressteile für eventuelle Folgebearbeitungen kann daher entfallen. Aufgrund der lageorientierten Übergabe im Takt der Umformmaschine können Beschädigungen oder Vermischungen von Pressteilen systematisch ausgeschlossen werden. Die Pressteile werden in der Reihenfolge ihrer Fertigung der (mindestens einen) Folgestation zugeführt. Mithilfe eines pneumatischen Fördersystems können Pressteile kostengünstig auch über größere Distanzen transportiert werden. Dies schafft große Flexibilität beim Aufbau größerer Fertigungsanlagen unter Einbindung von Umformpressen der hier betrachteten Art. Die einzelnen Komponenten verketteter Anlagen können flexibler als bisher positioniert werden.

Durch Minimierung der Verschleppung von Maschinenöl und ein entsprechend sauberes Maschinenumfeld können Ressourcen und Kosten eingespart werden. Auch durch Entfall von Transportbändern, Ölwannen, Leckölpumpen und deren Steuerung etc. ergeben sich Ressourcen- und Kosteneinsparungen. Weitere Beiträge zur Ressourcen- und Kosteneinsparung ergeben sich durch Reduzierung von Transportwegen und Reduzierung des Platzbedarfs. Zusätzlich kann der entstehende Sog im Arbeitsbereich durch die Absaugung eine Kühlung der Werkzeuge begünstigen und damit deren Standzeit erhöhen.

Ein zur Durchführung des Verfahrens geeignetes System umfasst mindestens eine Mehrstufenpresse und ein zugeordnetes pneumatisches Fördersystem.

Gemäß einer Weiterbildung weist das Auswerfersystem einen im Maschinentakt hin und her bewegbaren Auswerferstift auf, der fertig gepresste Umformteile jeweils aus einer in der Auswerferstation angeordneten Matrize oder aus einem Greifer in Richtung des Transportrohrs vorschiebt, wobei die Einführöffnung derart nahe am Auswerfersystem angebracht ist, dass die fertigen Umformteile mithilfe des Auswerferstifts unmittelbar in die Einführöffnung hineingeschoben werden. Vorzugsweise steht der Auswerferstift mit dem schaftseitigen Ende des Umformteils mindestens so lange in Berührungskontakt, bis wenigstens der Kopfabschnitt vollständig in das Innere des Transportrohres hineingeschoben ist. Somit kann eine vollständig kontrollierte, lageorientierte Übergabe sichergestellt werden.

Gemäß einer Weiterbildung wird ein an die Dimensionen des Umformteils angepasstes, also werkstückangepasstes Transportrohr verwendet. Folgende Auslegungskriterien können einzeln oder in Kombination erfüllt sein.

Vorzugsweise weist das Transportrohr einen Innendurchmesser auf, der kleiner als eine Länge der Umformteile ist. Damit kann auf einfache Weise verhindert werden, dass sich die Pressteile innerhalb des Transportrohrs während des Transports umorientieren und/oder einander überholen. Die Lageorientierung setzt sich also bei der Bewegung über die Transportstrecke fort.

Alternativ oder zusätzlich wird ein werkstückangepasstes Transportrohr verwendet, welches einen Innendurchmesser aufweist, der geringfügig größer als ein Außendurchmesser des Kopfabschnitts ist, wobei der Innendurchmesser vorzugsweise höchstens 20 % größer, insbesondere höchstens 10 % größer, ist als der Außendurchmesser des Kopfabschnitts. Bei Kopfabschnitten, die keinen kreisrunden, sondern beispielsweise einen polygonalen Querschnitt haben, bezieht sich der Begriff Außendurchmesser auf den größten Außendurchmesser des Kopfabschnitts. Durch die enge Anpassung der Innendimensionen des Transportrohrs an die Werkstückdimensionen können relativ kleine radiale Spaltdicken zwischen der Außenseite des Kopfabschnitts und der Rohrinnenseite erzielt werden. Dadurch wirken die Kopfabschnitte der Pressteile ähnlich wie Kolben in einem Zylinder. Damit kann ein zuverlässiger Transport auch dann erreicht werden, wenn die Druckdifferenz zwischen der Überdruckseite und der Unterdruckseite am Pressteil relativ gering ist. Dementsprechend kann bei Förderung mit Druckluft der Druckluftbedarf begrenzt werden, was zur Ressourcenschonung beiträgt.

Alternativ oder zusätzlich kann das Transportrohr einen Innendurchmesser aufweisen, der kleiner ist als die Summe der Außendurchmesser des Kopfabschnitts und des Schaftabschnitts. Dadurch kann ein Verklemmen aufeinanderfolgender Pressteile vermieden werden.

Bei bevorzugten Ausführungsformen bildet das Transportrohr eine Transportstrecke, die von der Einführöffnung in einer Transportrichtung zu einer Abgabeöffnung führt, wobei mit Abstand hinter der Einführöffnung eine Druckgaseinspeisungseinrichtung angeordnet ist, die dazu ausgebildet ist, unter einem Überdruck stehendes Druckgas parallel oder im spitzen Winkel zur Transportrichtung in das Transportrohr einzuleiten. Dadurch kann erreicht werden, dass stromaufwärts der Druckgaseinspeisungseinrichtung, also in Richtung der Einführöffnung, eine Unterdruckseite entsteht, während stromabwärts der Druckgaseinspeisung Überdruck herrscht. Die in das Transportrohr eingeführten Pressteile werden somit bis zur Druckgaseinspeisungseinrichtung angesaugt, beim Durchtritt durch die Druckgaseinspeisungseinrichtung beschleunigt und dahinter mittels Überdrucks befördert. An der Abgabeöffnung kann sich z.B. eine Folgestation anschließen oder eine weitere Druckgaseinspeisungseinrichtung oder die Umformteile können dort das Fördersystem frei verlassen.

Dabei hat es sich als vorteilhaft herausgestellt, wenn der Abstand der Druckgaseinspeisungseinrichtung von der Einführöffnung der Transportstrecke weder zu klein noch zu groß ist. Der Abstand kann so bemessen sein, dass die Druckgaseinspeisungseinrichtung der Abgabeöffnung näherliegt als der Einführöffnung. Vorteilhafte Abstände zwischen der Einführöffnung und der Druckgaseinspeisungseinrichtung können beispielsweise mindestens fünfzig Mal oder mindestens einhundert Mal so groß sein wie der Innendurchmesser des Transportrohrs. Alternativ oder zusätzlich kann der Abstand wenigstens 750 mm, insbesondere 1200 mm oder mehr betragen, insbesondere dann, wenn der Innendurchmesser im Bereich von 5 mm bis 10 mm liegt.

Durch einen relativ großen Abstand zwischen Einführöffnung und Druckgaseinspeisungseinrichtung kann u.a. sichergestellt werden, dass die Einführöffnung weitgehend unabhängig von der Anordnung der Druckgaseinspeisungseinrichtung exakt vor dem Auswerfersystem positioniert werden kann, ohne dass die Druckgaseinspeisungseinrichtung mit werkzeugnahen Teilen der Umformmaschine kollidiert oder in deren Einflussbereich liegt. Andererseits sollte der Abstand auch nicht zu groß sein, um auf der Einsaugseite zwischen Einführöffnung und Druckgaseinspeisungseinrichtung in jedem Fall eine ausreichend starke Sogwirkung zu erzeugen.

Die Strecke stromabwärts der Druckgaseinspeisungseinrichtung zwischen dieser und der Abgabeöffnung, also auf der Überdruckseite der ersten auf die Einführöffnung folgenden Druckgaseinspeisungseinrichtung, sollte nicht zu lang sein, da nach den Erfahrungen der Erfinder ansonsten das Risiko von "Auffahrunfällen" aufeinander folgender Pressteile im Rohr und dadurch eventuell bedingter Störungen zunimmt. In anderen Worten: wenn die Seite mit Überdruck zu lang ist, können die Teile sich ineinander verhaken, ggf. ineinander feststecken und ggf. engere Radien im Rohr nicht mehr passieren.

Es ist möglich, in einer Förderstrecke mehr als eine Druckgaseinspeisungseinrichtung einzufügen, so dass zwei oder mehr mit Abstand zueinander liegende Einspeisungsorte vorliegen. Eine weitere Druckgaseinspeisungseinrichtung kann an der Ausgabeöffnung angeordnet sein, um die dort ankommenden Pressteile in Richtung nachfolgender Rohrabschnitte zu beschleunigen und zur Aufrechterhaltung einer Ordnung in der Förderstrecke beizutragen.

Mithilfe eines pneumatischen Fördersystems ist es sehr einfach möglich, unterschiedlichste Folgestationen mit lageorientierten und im Takt der Maschine ankommenden Pressteilen zu versorgen. Es können beispielsweise eine oder mehrere der nachfolgend aufgezählten Folgestationen nachgeschaltet sein: eine Kontrollstation zur Qualitätskontrolle der Pressteile; eine Gewindewalzstation zur Erzeugung von Gewinden am Schaftabschnitt durch Gewindewalzen, eine Kuppstation zur Formgebung an den Stirnseiten; eine Härtstation zum Härten der geformten Pressteile; eine automatische Montagemaschine z.B. für Kettenfertigung; eine Verpackungsstation zur Verpackung der Pressteile in geeigneten Gebinden für den weiteren Vertrieb.

Ein Rohrsystem der pneumatischen Fördereinrichtung kann bei Bedarf eine oder mehrere Sortierweichen enthalten, um im Bereich einer Verzweigung die herangeförderten Pressteile entsprechend bestimmter Kriterien in eine oder mehrere Untergruppen aufzuteilen. Beispielsweise kann in Transportrichtung hinter einer Kontrollstation eine Sortierweiche angeordnet sein, um die kontrollierten Pressteile in Gutteile (innerhalb der Spezifikation) und Schlechtteile (außerhalb der Spezifikation) automatisch zu sortieren. Das Rohrsystem des pneumatischen Fördersystems kann mit anderen Transporteinrichtungen kombiniert werden, beispielsweise mit einer oder mehreren Rutschen, einem oder mehreren Sammelbehältern, einem oder mehreren Förderbändern oder dergleichen.

Merkmale, die im Zusammenhang mit dem Verfahren u.a. hinsichtlich ihrer Funktionsweise erläutert werden, sind sinngemäß auch bei dem System in Form geeigneter struktureller Merkmale vorhanden. Das gilt auch umgekehrt.

### KURZBESCHREIBUNG DER ZEICHNUNGEN

Weitere Vorteile und Aspekte der Erfindung ergeben sich aus den Ansprüchen und aus der Beschreibung von Ausführungsbeispielen der Erfindung, die nachfolgend anhand der Figuren erläutert sind.
- Fig. 1: zeigt eine perspektivische Übersichtsdarstellung eines Ausführungsbeispiels eines Systems mit einer Drahtumformmaschine und angeschlossenem pneumatischen Fördersystem;
- Fig. 2: zeigt eine Detailansicht des mit Umformwerkzeugen ausgestatteten Arbeitsbereichs der Umformmaschine aus Fig. 1;
- Fig. 3: zeigt den Übergabebereich zwischen dem Auswerfersystem und dem Transportrohr des Fördersystems;
- Fig. 4: zeigt einen Schnitt durch das Transportrohr mit einem darin aufgenommenen Pressteil;
- Fig. 5: zeigt eine schematische Seitenansicht eines Systems mit Umformmaschine und zugeordnetem pneumatischen Fördersystem;
- Fig. 6: zeigt einen schematischen Längsschnitt durch eine Druckgaszufuhreinrichtung des Fördersystems;
- Fig. 7 bis 9: zeigen Beispiele für Folgestationen, die mittels des Fördersystems beschickt werden können;
- Fig. 10: zeigt ein Ausführungsbeispiel einer für vier Umformstufen ausgebildeten Mehrstufenpresse mit angeschlossenem pneumatischen Fördersystem.

### DETAILLIERTE BESCHREIBUNG DER AUSFÜHRUNGSBEISPIELE

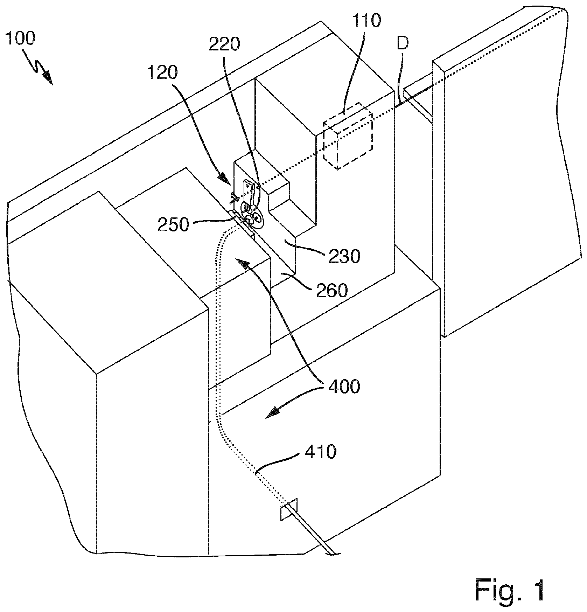

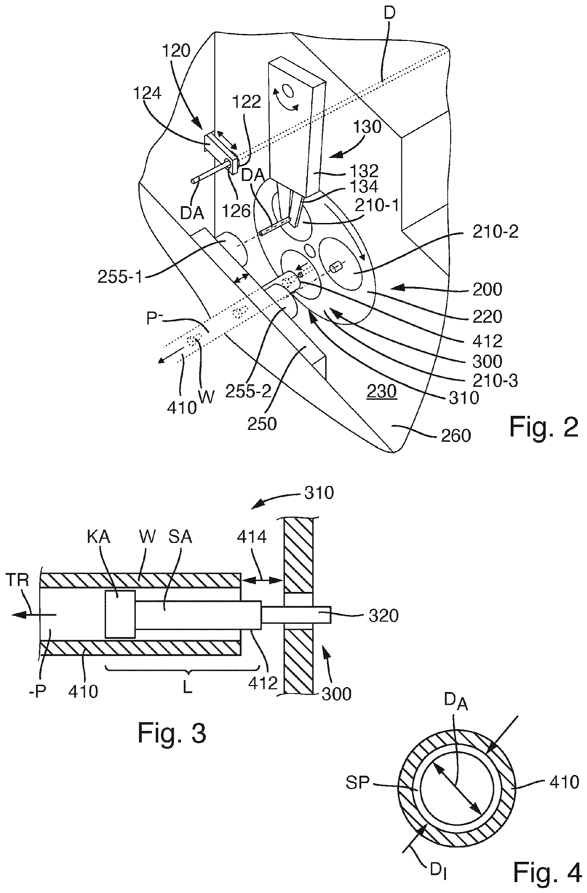

Die perspektivische Übersichtsdarstellung in Fig. 1 sowie die Detailansicht des mit Umformwerkzeugen ausgestatteten Arbeitsbereich bzw. Umformbereichs in Fig. 2 zeigen ein Ausführungsbeispiel einer Drahtumformmaschine 100 zur Herstellung von Umformteilen aus Draht D. Die computernumerisch gesteuerte, mehrachsige Drahtumformmaschine hat mehrere steuerbare Maschinenachsen und eine Steuereinrichtung zur koordinierten Ansteuerung von Arbeitsbewegungen der Maschinenachsen in einem Fertigungsprozess gemäß einem für den Fertigungsprozess spezifischen, computerlesbaren Steuerprogramm.

Es ist möglich, Umformteile auf mehrstufigen Umformern zu produzieren. Dies kann relativ unwirtschaftlich sein. Unter einem immer stärker werdenden Kostendruck gehen Hersteller zunehmend dazu über, doppeldruckfähige Umformteile auf Hochleistungspressen zu fertigen.

Doppeldruckpressen können diese Produkte mit höchster Ausbringung, geringeren Werkzeugkosten und kürzeren Rüstzeiten produzieren.

Die Umformmaschine 100 in Fig. 1 ist eine Doppeldruck-Umformpresse mit rotierenden Matrizen zur Herstellung von Schrauben, Nieten und anderen Umformteilen aus Drahtabschnitten durch Kaltumformung. Die fertigen Umformteile werden auch als Presssteile bezeichnet.

Die Drahtumformmaschine 100 weist ein Einzugssystem 110 zum taktweisen Einziehen von Draht D von einem Drahtvorrat und zum Fördern des Drahts zu einem Schnittsystem 120 auf. Eine Transportzange (Einzugszange) des Einzugssystems weist eine kraftschlüssig am Draht angreifende Klemmbacke auf, die bei wechselnden Drahtdurchmessern entsprechend auszutauschen ist. Eine gesonderte Haltezange zum Halten des Drahts während des Abscherens des Drahtes ist nicht erforderlich.

Weiterhin ist ein Schnittsystem 120 vorgesehen, das eine maschinenfest montierte Scherbuchse 122 zum Hindurchführen des vom Einzugssystem geförderten Drahts D sowie ein an einem beweglich gelagerten Schermesserträger 124 befestigtes geschlossenes Schermesser 126 zum taktweisen Abtrennen von Drahtabschnitten DA von dem zugeführten Draht aufweist. Außerdem ist ein mit einem Zubringerhebel 132 ausgestattetes Zubringersystem 130 zum Greifen jeweils eines abgetrennten Drahtabschnitts DA und zum Zuführen des Drahtabschnitts in den Arbeitsbereich von Umformwerkzeugen 200 der Drahtumformmaschine vorgesehen.

Das geschlossene Schermesser 126, das von dem Schermesserträger 124 ohne eigenen Antrieb getragen wird, wird indirekt über Bewegungen des Zubringerhebels 132 gesteuert. Das Ausstoßen des abgetrennten Drahtabschnittes DA erfolgt durch den nachschiebenden Draht der Einzugsbewegung, so dass am Schnittsystem keine gesonderte Auswerferstation nötig ist. Es erfolgt eine Übernahme des abgetrennten Drahtabschnitts DA in eine ungesteuerte Greiferzange 134 und eine Schwenkbewegung des Zubringers 132 vor die Umformmatrize.

Die Umformwerkzeuge 200 umfassen drei Matrizen 210-1, 210-2, 210-3 in einem drehbaren bzw. schwenkbaren Matrizenhalter 220. Der Matrizenhalter 220 ist in einem Matrizenblock 230 gelagert. Die Matrizen werden durch kurvengesteuerte Verriegelung präzise in Arbeitsposition gehalten.

Mit axialem Abstand gegenüber dem Matrizenblock ist ein Stempelblock 250 angeordnet, der zwei feststehende Stempel 255-1, 255-2 trägt, die zu den Umformwerkzeugen gehören und gegenüber den oberen Arbeitspositionen der Matrizen angeordnet sind. Die Matrizen werden durch die beiden feststehenden Stempel 255-1, 255-2 bei jedem Presshub wechselseitig beaufschlagt. Synchron arbeitende Auswerfersysteme (matrizen- und stempelseitig) verhindern ein Hängenbleiben des fertigen Formteils (des Stauchteils) in den Werkzeugen der jeweiligen Arbeitspositionen.

Unterhalb der oberen beiden, den Stempeln gegenüberliegenden Arbeitsstationen ist eine Arbeitsstation angeordnet, der kein Stempel zugeordnet ist, wo also keine Umformung stattfindet. Diese Arbeitsstation ist die Auswerferstation 310 des Auswerfersystem 300 für fertige Pressteile. In Fig. 2 ist die dritte Matrize 210-3 an der Auswerferstation angeordnet. Das Auswerfersystem weist einen im Maschinentakt achsparallel hin und her bewegbaren Auswerferstift 320 auf, der die fertig gepressten Pressteile von der Maschinenseite her jeweils aus der in der Auswerferstation angeordneten Matrize nach vorne in Richtung Stempelblock drückt und dadurch aus der Matrize auswirft.

Mithilfe des rotierenden Matrizenhalters können drei Arbeitsschritte simultan durchgeführt werden. Mithilfe eines Vorstauchers wird zunächst der Kopfabschnitt vorgeformt. Mithilfe des nachfolgenden Fertigstauchers erfolgt eine Kopfvollausformung. Schließlich wird an der Auswerferstation mithilfe des Auswerferstifts das in zwei Pressstufen fertig gefertigte Pressteil W ausgeworfen.

Die Maschinenschmierung und separate Werkzeugschmierung gewährleisten durch Kapselung von Baugruppen weitestgehend vermischungsfreie Ölkreisläufe. Ein wartungsfreier Zahnriemen sorgt für den synchronen Antrieb sämtlicher Nebenantriebe. Alle beweglichen Teile sind mit festverschraubten Schutzabdeckungen gesichert. Bewegliche Schutzabdeckungen sorgen für einfachen Zugang zu den geschützten Komponenten.

Zwischen dem Matrizenblock 230 und dem Stempelblock 250 verläuft senkrecht zur Drehachse des Matrizenblocks ein Zwischenraum 260. Im Bodenbereich des Zwischenraums verläuft bei konventionellen Doppeldruck-Umformmaschinen ein Förderband oder eine Rutsche eines Transportsystems, das die vom Auswerfersystem ausgeworfenen Pressteile sammelt und zur Seite wegtransportiert. Dort sammeln sich in der Regel auch Reste des Maschinenöls, die die Pressteile benetzen können.

Das mit der Doppeldruck-Umformmaschine 100 ausgestattete Fertigungssystem zur Herstellung von Umformteilen aus Draht ist abweichend davon mit einem pneumatischen Fördersystem 400 zum kontrollierten Abtransportieren fertiger Umformteile ausgestattet. Das Fördersystem ist Teil des Fertigungssystems und umfasst ein glattwandiges metallisches Transportrohr 410, z.B. aus Edelstahl, welches eine Einführöffnung 412 zum sukzessiven Aufnehmen fertiger Umformteile hat. Fig. 3 zeigt den Übergabebereich zwischen dem Auswerfersystem 300 und dem Transportrohr 410 des Fördersystems 400. Wie in Fig. 2 und 3 gut zu erkennen ist, erstreckt sich der unmittelbar an die Einführöffnung 412 anschließende Abschnitt des Transportrohrs 410 parallel zur Hauptachse der Umformmaschine (Drehachse des Matrizenhalters 220). Die Einführöffnung ist an der Auswurfstation 310 in unmittelbarer Nähe der maschinenseitigen Komponenten des Auswerfersystems koaxial zur Längsmittelachse des Auswerferstifts 320 angeordnet. Der axiale Abstand 414 zwischen der Einführöffnung und der dieser zugewandten Stirnseite der jeweils in der Auswerferstation angeordneten Matrize ist dabei so bemessen, dass er nicht wesentlich größer ist als der Überstand, mit dem ein fertiges Pressteil über die Stirnseite der Matrize hinaussteht, nachdem das Pressteil fertig gepresst ist. Der Abstand kann beispielsweise in der Größenordnung von 10 bis 50 mm liegen. Die Einführöffnung 412 ist dadurch derart nahe am Auswerfersystem angebracht, dass die fertigen Umformteile mithilfe des Auswerfersystems, insbesondere mithilfe des Auswerferstifts 320, unmittelbar in die Einführöffnung hineingeschoben werden können. Der Auswerferstift steht mit dem schaftseitigen Ende mindestens so lange in Berührungskontakt, bis wenigstens der Kopfabschnitt vollständig in das Innere des Transportrohres hineingeschoben ist. Die Pressteile haben dabei keine Möglichkeit, ihre Orientierung im Raum bzw. ihre Lage nach Austritt aus der Matrize und Einführung in die Einführöffnung zu ändern, so dass die Pressteile unmittelbar und lageorientiert in die Einführöffnung 412 hineingeschoben werden können.

Wie später noch näher erläutert wird, ist das pneumatische Fördersystem 400 so ausgelegt, dass im Bereich der Einführöffnung 412 im Vergleich zum Umgebungsdruck ein Unterdruck (Symbol: -p) herrscht, so dass die Pressteile im Maschinentakt in das Transportrohr eingesogen werden. Der Weitertransport verläuft zunächst mittels Unterdruck entlang der durch die Orientierung des Transportrohrs vorgegebenen Transportstrecke in Richtung wenigstens einer Folgestation.

Das Transportrohr 410 ist eine werkstückangepasste Komponente des Fördersystems 400. Im Beispielsfall werden mittels Doppeldruck Pressteile W hergestellt, die in Bezug auf eine Werkstücklängsachse rotationssymmetrisch sind und an einem ihrer Enden einen durch mehrstufiges Pressen erzeugten Kopfabschnitt KA aufweisen, der gegenüber einem einstückig damit ausgebildeten Schaftabschnitt SA allseitig verbreitert ist. Der Kopfabschnitt KA des Beispielwerkstücks ist im Wesentlichen zylindrisch geformt und hat einen Außendurchmesser D_{A} (vgl. Fig. 4). Das Transportrohr 410 hat einen an die Werkstückgeometrie angepassten Innendurchmesser D_{I}, der nur wenige Prozent größer ist als der Außendurchmesser des Kopfabschnitts, z.B. nicht mehr als 25% größer oder nicht mehr als 20% größer. Der Innendurchmesser sollte nicht größer sein als die Summe der Durchmesser des Kopfabschnitts und des Schaftabschnitts, dadurch kann ein Verkeilen hintereinander laufender Pressteile vermieden werden. Vorzugsweise verbleibt zwischen dem Rand des Kopfabschnitts KA und der Rohrinnenwand nur ein relativ schmaler Ringspalt SP, dessen radiale Ausdehnung beispielsweise in der Größenordnung von 1 mm oder 2 mm und/oder im Bereich 10 % bis 20 % des Außendurchmessers des Kopfabschnitts liegen kann. Die Pressteile W fungieren daher ähnlich wie ein Kolben in einem Zylinder. Dadurch reicht ein relativ geringer Unterdruck im Transportrohr aus, um die Transportbewegung in Transportrichtung TR zu erzeugen.

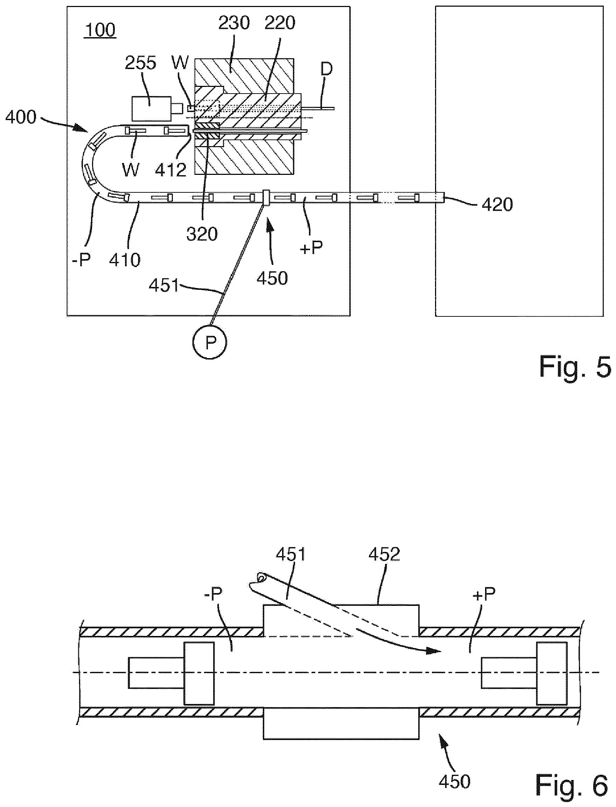

Um die Saugwirkung im Bereich der Einführöffnung 412 des Transportrohrs 410 zu erzielen, ist bei dem Fördersystem 400 mit relativ großem Abstand von der Einführöffnung eine Druckgaseinspeisungseinrichtung 450 vorgesehen, die vor allem in Fig. 6 gut zu erkennen ist. Die Druckgaseinspeisungseinrichtung umfasst ein Zuführrohr 451, das über eine Druckgasleitung an eine Druckgasquelle (zum Beispiel Pumpe P in Fig. 5) angeschlossen ist. Diese stellt unter einem Überdruck stehende Druckluft bereit und pumpt diese Richtung Druckgaseinspeisungseinrichtung. Das Zuführrohr 451 verläuft in spitzem Winkel (z.B. 10° bis 30°) schräg zur Längsrichtung des Transportrohrs und mündet im Bereich einer Mündungsöffnung 452 in das Innere der Druckgaseinspeisungseinrichtung, deren Innendurchmesser ansonsten dem des Transportrohres entspricht und mit diesem einen stufenfreien glattwandigen Transportkanal bildet. Die Mündungsöffnung 452 ist so klein, dass ein Verhaken des Kopfabschnitts an dieser Stelle ausgeschlossen ist.

Das durch die Mündungsöffnung einströmende Druckgas wird so geleitet, dass die unter Überdruck stehende Druckluft mehr oder weniger parallel oder im spitzen Winkel zur Transportrichtung in das Transportrohr 410 eingeleitet wird. Dadurch entsteht stromabwärts der Druckgaseinspeisungseinrichtung (in Fig. 6 rechts) eine Überdruckseite (+p). An der in Richtung der Mündungsöffnung führenden Zufuhrseite entsteht dagegen der Unterdruck (-p), der im gesamten Transportrohr zwischen der Druckgaseinspeisungseinrichtung und der Einführöffnung herrscht und der dafür sorgt, dass die Pressteile in die Einführöffnung 412 eingesogen werden.

Die im mittleren Bereich des Transportrohrs zwischen der Einlassöffnung 412 und einer Auslassöffnung 420 angebrachte Druckluftdüse bzw. Druckgaseinspeisungseinrichtung 450 erzeugt also auf der Rohreingangsseite einen Unterdruck, auf der Rohrausgangsseite jedoch einen Überdruck. Dadurch werden die Umformteile auf der Rohreingangsseite angesaugt und während des Passierens durch die Druckgaseinspeisungseinrichtung erheblich beschleunigt. Dabei fungieren die Umformteile als eine Art Kolben in einem durch das Transportrohr gebildeten Zylinder, wodurch der Unterdruck an der Rohreingangsseite nochmals erheblich verstärkt wird. Die Strömungsgeschwindigkeit innerhalb des Transportrohrs wird somit durch die Pressteile selbst erhöht. Mithilfe dieses Systems kann die eingesetzte Druckluft erheblich reduziert werden, somit können weitere Ressourcen gespart werden.

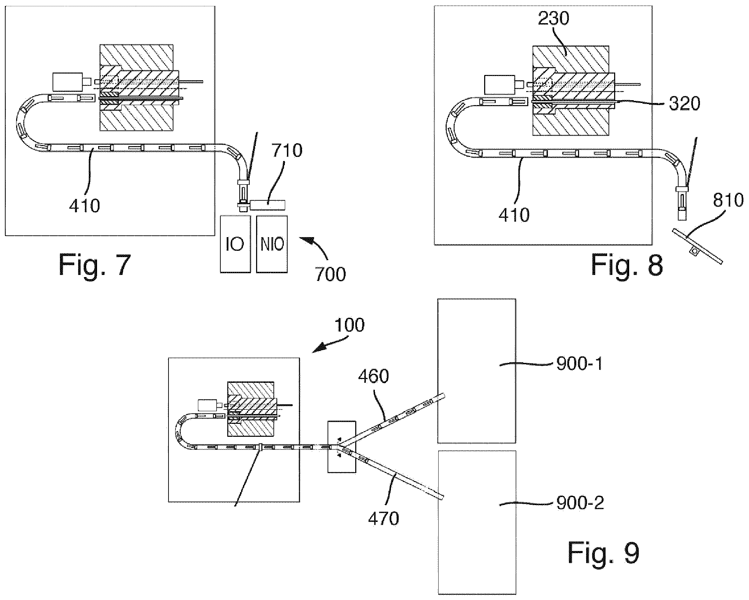

Anhand der Fig. 7, 8 und 9 werden beispielhaft einige mögliche Folgeschritte bei der Weiterverarbeitung der Pressteile an der Ausgangsseite des Transportrohrs erläutert. In Fig. 7 befindet sich die Druckgaseinspeisungseinrichtung in der Nähe der Ausgangsseite des Transportrohrs oberhalb von Sammelbehältern 700 für die Pressteile. Eine vorgeschaltete Sortiereinrichtung 710 prüft die fertigen Pressteile auf Einhaltung der Toleranzen, so dass die Pressteile in getrennte Sammelbehälter für Gutteile (IO) und Schlechtteile (NIO) aufgeteilt werden können.

In Fig. 8 ist anstelle der Sortiereinrichtung eine Rutsche bzw. eine Sortierweiche 810 zum Sortieren der Pressteile vorgesehen.

Fig. 9 zeigt schematisch eine größere Fertigungsanlage bzw. ein Fertigungssystem, in das die Doppeldruck-Umformmaschine 100 integriert ist. Am Auslassende bzw. an der Auslassöffnung 420 des Transportrohrs 410 befindet sich ein Verteilersystem 910, welches die ankommenden Pressteile nach bestimmten Kriterien in zum Beispiel zwei abgehende Zweige 460, 470 mit Transportrohren sortiert. Im Beispielsfall führen die weiterführenden Transportstrecken zu zwei schematisch dargestellten Maschinen 900-1, 900-2, die exemplarisch für beliebige nachfolgende Prozessschritte oder Fertigungsschritte stehen. Denkbar ist die Verteilung zu unterschiedlichen Prozessen oder (falls die Stückleistung des Nachfolgeprozesses geringer ist) die Aufteilung auf mehrere Maschinen eines Prozessschritts.

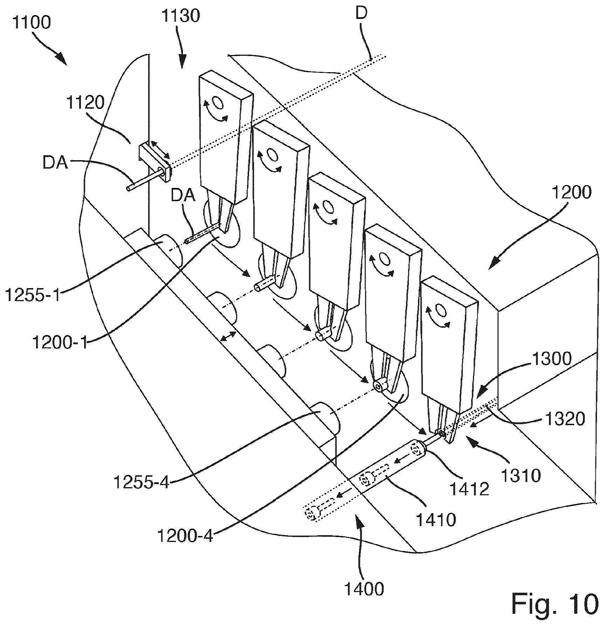

Einige Aspekte der Erfindung wurden am Beispiel eines Systems mit einer Doppeldruck-Umformpresse 100 erläutert. Die Erfindung kann auch bei anderen Drahtumformmaschinen genutzt werden, z.B. bei Mehrstufenpressen. Fig. 10 zeigt zur Illustration eine schrägperspektivische Ansicht eines mit Umformwerkzeugen ausgestatteten Arbeitsbereichs einer für vier Umformstufen ausgebildeten Mehrstufenpresse 1100. Aus Gründen der Übersichtlichkeit werden Merkmale, die entsprechenden Merkmalen der Doppeldruck-Umformpresse 100 funktionell und/oder strukturell ähnlich oder gleich sind, mit den gleichen Bezugszeichen erhöht um 1000, bezeichnet.

Die Umformwerkzeuge 1200 umfassen vier in Reihe horizontal nebeneinander angeordnete Matrizen 1200-1 bis 1200-4, die in einem Matrizenblock gelagert sind. Jeder Matrize ist ein schwenkbarer Greifer zugeordnet. Derjenige Greifer, der direkt neben dem Schnittsystem 1120 angeordnet ist, gehört zum Zubringersystem 1130, das den vom zugeführten Draht D abgetrennten Drahtabschnitt DA in die erste Matrize 1200-1 bringt. Die anderen Greifhebel schwenken koordiniert mit diesem ersten Greifer und transportieren den Drahtabschnitt sukzessive von der ersten über die zweite und die dritte Matrize zur vierten Matrize 1200-4. Jeweils zwischen den Transportphasen werden die den Matrizen gegenüberliegenden Stempel 1255-1 bis 1255-4 in Richtung des Matrizenblocks verfahren und stauchen dadurch das Werkstück in insgesamt vier Stufen. Das in der vierten Matrize 1200-4 fertiggestauchte Pressteil W wird dann von einem fünften verschwenkbaren Greifer gegriffen und horizontal in eine Auswerferposition des Auswerfersystems 1300 bewegt. Dieses umfasst einen Auswerferstift 1320, der im Maschinentakt horizontal hin und her bewegbar ist und im Vorwärtshub ein von der Zange gehaltenes fertiges Werkstück nach vorne in Richtung Stempelblock schieben kann.

Analog zum anderen Ausführungsbeispiel ist im Bereich der Auswerferstation die Einführöffnung 1412 eines Transportrohres 1410 des pneumatischen Fördersystems 1400 angeordnet. Die Übergabe der fertigen Pressteile erfolgt analog zur oben beschriebenen Doppeldruck-Umformpresse, weshalb auf die dortige Beschreibung verwiesen wird. Hinsichtlich des Transportsystems geltend die gleichen Angaben wie für das dortige Ausführungsbeispiel.

## Patentansprüche

1. Verfahren zur Herstellung von Umformteilen (W) aus Draht (D) mittels einer Mehrstufenpresse (100), insbesondere zur Herstellung von Schrauben oder Nieten aus Drahtabschnitten, umfassend:
Taktweises Einziehen des Drahts (D) von einem Drahtvorrat und Fördern des Drahts zu einem Schnittsystem (120);
Taktweises Abtrennen von Drahtabschnitten (DA) von dem zugeführten Draht (D) durch das Schnittsystem;
Greifen jeweils eines abgetrennten Drahtabschnitts (DA) und Zuführen des Drahtabschnitts in den Arbeitsbereich von Umformwerkzeugen (200);
Mehrstufiges Umformen des Drahtabschnitts zu einem Umformteil (W) mit einem Schaftabschnitt (SA) und einem gegenüber dem Schaftabschnitt verbreiterten Kopfabschnitt (KA) mittels der Umformwerkzeuge;
taktweises Auswerfen der fertig geformten Umformteile mittels eines Auswerfersystems (300);
Abtransportieren der fertig geformten Umformteile;
**gekennzeichnet durch** folgende Schritte:
Bereitstellen eines pneumatischen Fördersystems (400) zum Abtransportieren fertiger Umformteile, wobei das Fördersystem ein Transportrohr (410) mit einer Einführöffnung (412) zur sukzessiven Aufnahme fertiger Umformteile umfasst;
Anordnen der Einführöffnung (412) in der Nähe des Auswerfersystems (300) derart, dass die fertigen Umformteile mittels des Auswerfersystems unmittelbar lageorientiert in die Einführöffnung (412) eingeführt werden können;
Sukzessives Einführen der fertigen Umformteile (W) in das Transportrohr (410) mittels des Auswerfersystems während des Fertigungsbetriebs;
Übernehmen der in das Transportrohr (410) eingeführten Umformteile (W) durch Einsaugen in das Transportrohr (410);
Pneumatisches Abtransportieren der angesaugten Umformteile (W) durch das Transportrohr hindurch in Richtung einer Folgestation.

2. Verfahren nach Anspruch 1, **dadurch gekennzeichnet, dass** das Auswerfersystem (300) einen im Maschinentakt hin und her bewegbaren Auswerferstift (320) aufweist, der fertig gepresste Umformteile (W) jeweils aus einer in der Auswerferstation (300) angeordneten Matrize oder aus einem Greifer in Richtung des Transportrohrs (410) vorschiebt, wobei die Einführöffnung (412) derart nahe am Auswerfersystem angebracht ist, dass die fertigen Umformteile (W) mithilfe des Auswerferstifts (320) unmittelbar in die Einführöffnung hineingeschoben werden.

3. Verfahren nach Anspruch 1 oder 2, **dadurch gekennzeichnet, dass** ein an Dimensionen des Umformteils (W) angepasstes Transportrohr (410) verwendet wird, worin eine oder mehrere der folgenden Bedingungen gelten:
(i) das Transportrohr weist einen Innendurchmesser (D_{I}) auf, der kleiner als eine Länge (L) der Umformteile (W) ist;
(ii) das Transportrohr weist einen Innendurchmesser (D_{I}) auf, der höchstens 20% größer, insbesondere höchstens 10% größer und/oder höchstens 2 mm, insbesondere höchstens 1 mm größer ist als der Außendurchmesser des Kopfabschnitts;
(iii) das Transportrohr weist einen Innendurchmesser (D_{I}) auf, der kleiner ist als die Summe der Außendurchmesser des Kopfabschnitts (KA) und des Schaftabschnitts (SA).

4. Verfahren nach einem der Ansprüche 1, 2 oder 3, **dadurch gekennzeichnet, dass** das Transportrohr (410) eine Transportstrecke bildet, die von der Einführöffnung (412) in einer Transportrichtung zu einer Abgabeöffnung führt, wobei mit Abstand hinter der Einführöffnung eine Druckgaseinspeisungseinrichtung (450) angeordnet ist, die vorzugsweise dazu ausgebildet ist, unter einem Überdruck stehendes Druckgas parallel oder im spitzen Winkel zur Transportrichtung in das Transportrohr (410) einzuleiten.

5. Verfahren nach Anspruch 4, **dadurch gekennzeichnet, dass** der Abstand so bemessen ist, dass eine oder mehrere der folgenden Bedingungen gelten:
(i) die Druckgaseinspeisungseinrichtung ist der Abgabeöffnung näher als der Einführöffnung;
(ii) der Abstand liegt in einem Bereich von 50% bis 90% der Länge zwischen der Einführöffnung und der Abgabeöffnung;
(iii) der Abstand beträgt wenigstens 750 mm, insbesondere 1200 mm oder mehr;
(iv) der Abstand ist mindestens 50 Mal so groß, insbesondere mindestens 100 Mal so groß wie der Innendurchmesser des Transportrohres.

6. Verfahren nach einem der vorhergehenden Ansprüche, **dadurch gekennzeichnet, dass** zur Herstellung der Umformteile eine Mehrstufenpresse in Form einer Doppeldruck-Umformpresse (100) mit rotierenden Matrizen verwendet wird.

7. System zur Herstellung von Umformteilen (W) aus Draht, insbesondere zur Herstellung von Schrauben oder Nieten aus Drahtabschnitten, mit wenigstens einer Mehrstufenpresse umfassend:
ein Einzugssystem (110) zum taktweisen Einziehen von Draht (D) von einem Drahtvorrat und zum Fördern des Drahts zu einem Schnittsystem (120);
ein Schnittsystem (120) zum taktweisen Abtrennen von Drahtabschnitten (DA) von dem zugeführten Draht (D);
ein Zubringersystem (130) zum Greifen jeweils eines abgetrennten Drahtabschnitts (DA) und zum Zuführen des Drahtabschnitts in den Arbeitsbereich von Umformwerkzeugen (200) der Drahtumformmaschine;
mehrere Umformstationen mit Umformwerkzeugen (200) zum mehrstufigen Umformen des Drahtabschnitts zu einem Umformteil (W) mit einem Schaftabschnitt (SA) und einem gegenüber dem Schaftabschnitt verbreiterten Kopfabschnitt (KA);
ein Auswerfersystems (300) zum taktweisen Auswerfen der fertig geformten Umformteile (W), **gekennzeichnet durch**
ein pneumatisches Fördersystem (400) zum Abtransportieren fertiger Umformteile (W) aus dem Arbeitsbereich, wobei das Fördersystem (400) ein Transportrohr (410) mit einer Einführöffnung (412) zur sukzessiven Aufnahme fertiger Umformteile (W) umfasst,
die Einführöffnung (412) in der Nähe des Auswerfersystems (300) derart angeordnet ist, dass die fertigen Umformteile (W) mittels des Auswerfersystems unmittelbar lageorientiert in die Einführöffnung einführbar sind;
das Auswerfersystem (300) konfiguriert ist, während des Fertigungsbetriebs fertige Umformteile zur Übernahme durch das Fördersystem (400) taktweise durch die Einführöffnung in das Transportrohr mindestens teilweise einzuführen; und
das Fördersystem (400) konfiguriert ist, das vom Auswerfersystem übernommene Umformteil im Bereich der Eingangsöffnung (412) anzusaugen und pneumatisch durch das Transportrohr hindurch in Richtung einer Folgestation zu fördern.

8. System nach Anspruch 7, **dadurch gekennzeichnet, dass** das Auswerfersystem (300) einen im Maschinentakt hin und her bewegbaren Auswerferstift (320) aufweist, der dazu konfiguriert ist, fertig gepresste Umformteile (W) jeweils aus einer in einer Auswerferstation angeordneten Matrize in Richtung des Transportrohrs (400) vorzuschieben, wobei die Einführöffnung (412) derart nahe am Auswerfersystem angebracht ist, dass die fertigen Umformteile mithilfe des Auswerferstifts (320) unmittelbar in die Einführöffnung hineinschiebbar sind.

9. System nach Anspruch 7 oder 8, **dadurch gekennzeichnet, dass** das Transportrohr (410) derart an Dimensionen des Umformteils (W) angepasst ist, dass eine oder mehrere der folgenden Bedingungen gelten:
(i) das Transportrohr weist einen Innendurchmesser (D_{I}) auf, der kleiner als eine Länge (L) der Umformteile (W) ist;
(ii) das Transportrohr weist einen Innendurchmesser (D_{I}) auf, der höchstens 20% größer, insbesondere höchstens 10% größer und/oder höchstens 2 mm, insbesondere höchstens 1 mm größer ist als der Außendurchmesser des Kopfabschnitts;
(iii) das Transportrohr weist einen Innendurchmesser (D_{I}) auf, der kleiner ist als die Summe der Außendurchmesser des Kopfabschnitts (KA) und des Schaftabschnitts (SA).

10. System nach einem der Ansprüche 7, 8 oder 9, **dadurch gekennzeichnet, dass** das Transportrohr (410) eine Transportstrecke bildet, die von der Einführöffnung (412) in einer Transportrichtung zu einer Abgabeöffnung führt, wobei mit Abstand hinter der Einführöffnung eine Druckgaseinspeisungseinrichtung (450) angeordnet ist, die vorzugsweise dazu ausgebildet ist, unter einem Überdruck stehendes Druckgas parallel oder im spitzen Winkel zur Transportrichtung in das Transportrohr (410) einzuleiten.

11. System nach Anspruch 10, **dadurch gekennzeichnet, dass** der Abstand so bemessen ist, dass eine oder mehrere der folgenden Bedingungen gelten:
(i) die Druckgaseinspeisungseinrichtung (450) ist der Abgabeöffnung näher als der Einführöffnung (412);
(ii) der Abstand liegt in einem Bereich von 50% bis 90% der Länge zwischen der Einführöffnung und der Abgabeöffnung;
(iii) der Abstand beträgt wenigstens 750 mm, insbesondere 1200 mm oder mehr;
(iv) der Abstand ist mindestens 50 Mal so groß, insbesondere mindestens 100 Mal so groß wie der Innendurchmesser des Transportrohres (410).

12. System nach einem der Ansprüche 7 bis 11, **dadurch gekennzeichnet, dass** zur Herstellung der Umformteile eine Mehrstufenpresse in Form einer Doppeldruck-Umformpresse (100) mit rotierenden Matrizen verwendet wird.

13. System nach einem der Ansprüche 7 bis 12, **dadurch gekennzeichnet, dass** dem Fördersystem eine oder mehrere der folgenden Folgestationen nachgeschaltet ist:
(i) eine Kontrollstation zur Qualitätskontrolle der Pressteile;
(ii) eine Gewindewalzstation zur Erzeugung von Gewinden am Schaftabschnitt durch Gewindewalzen;
(iii) eine Kuppstation zur Formgebung an den Stirnseiten;
(iv) eine Härtstation zum Härten der geformten Pressteile;
(v) eine automatische Montagemaschine z.B. für Kettenfertigung;
(vi) eine Verpackungsstation zur Verpackung der Pressteile in geeigneten Gebinden für den weiteren Vertrieb.

## Claims

1. Method for producing shaped parts (W) from wire (D) by means of a multi-stage press (100), in particular for producing screws or rivets from wire portions, comprising:
drawing in the wire (D) from a wire supply in cycles and conveying the wire to a cutting system (120);
severing wire portions (DA) from the fed wire (D) in cycles by way of the cutting system;
gripping a respective severed wire portion (DA) and feeding the wire portion into the work area of shaping tools (200);
shaping the wire portion in multiple stages to form a shaped part (W) with a shank portion (SA) and a head portion (KA) that is widened with respect to the shank portion by means of the shaping tools;
ejecting the fully formed shaped parts in cycles by means of an ejector system (300);
transporting away the fully formed shaped parts;
**characterized by** the following steps:
providing a pneumatic conveyor system (400) for transporting away finished shaped parts, wherein the conveyor system comprises a transporting pipe (410) with an insertion opening (412) for successively receiving finished shaped parts;
arranging the insertion opening (412) in the vicinity of the ejector system (300) in such a way that the finished shaped parts can be inserted into the insertion opening (412) directly in a positionally oriented manner by means of the ejector system;
successively feeding the finished shaped parts (W) into the transporting pipe (410) by means of the ejector system during the manufacturing operation;
taking up the shaped parts (W) inserted into the transporting pipe (410) by suction into the transporting pipe (410);
pneumatically transporting away the sucked-on shaped parts (W) through the transporting pipe in the direction of a subsequent station.

2. Method according to Claim 1, **characterized in that** the ejector system (300) has an ejector pin (320) that can be moved back and forth in time with the machine cycles, which ejector pin displaces fully pressed shaped parts (W) respectively out of a die arranged in the ejector station (300) or out of a gripper in the direction of the transporting pipe (410), wherein the insertion opening (412) is mounted close to the ejector system in such a way that the finished shaped parts (W) are pushed directly into the insertion opening with the aid of the ejector pin (320).

3. Method according to Claim 1 or 2, **characterized in that** a transporting pipe (410) adapted to dimensions of the shaped part (W) is used, wherein one or more of the following conditions apply:
(i) the transporting pipe has an inside diameter (D_{I}) which is smaller than a length (L) of the shaped parts (W);
(ii) the transporting pipe has an inside diameter (D_{I}) which is at most 20% larger, in particular at most 10% larger and/or at most 2 mm, in particular at most 1 mm larger than the outside diameter of the head portion;
(iii) the transporting pipe has an inside diameter (D_{I}) which is smaller than the sum of the outside diameter of the head portion (KA) and the shank portion (SA).

4. Method according to one of Claims 1, 2 or 3, **characterized in that** the transporting pipe (410) forms a transport section which leads from the insertion opening (412) to a discharge opening in a transporting direction, wherein, at a distance downstream of the insertion opening, there is arranged a compressed-gas infeed device (450), which is preferably designed to introduce compressed gas at a positive pressure into the transporting pipe (410) parallel or at an acute angle to the transporting direction.

5. Method according to Claim 4, **characterized in that** the distance is dimensioned such that one or more of the following conditions apply:
(i) the compressed-gas infeed device is closer to the discharge opening than to the insertion opening;
(ii) the distance is in a range of 50% to 90% of the length between the insertion opening and the discharge opening;
(iii) the distance amounts to at least 750 mm, in particular to 1200 mm or more;
(iv) the distance is at least 50 times greater, in particular at least 100 times greater, than the inside diameter of the transporting pipe.

6. Method according to one of the preceding claims, **characterized in that**, to produce the shaped parts, use is made of a multi-stage press in the form of a double-pressure shaping press (100) with rotating dies.

7. System for producing shaped parts (W) from wire, in particular for producing screws or rivets from wire portions, having at least one multi-stage press comprising:
a drawing-in system (110) for drawing in wire (D) from a wire supply in cycles and for conveying the wire to a cutting system (120);
a cutting system (120) for severing wire portions (DA) from the fed wire (D) in cycles;
a feeder system (130) for gripping a respective severed wire portion (DA) and for feeding the wire portion into the work area of shaping tools (200) of the wire shaping machine;
multiple shaping stations with shaping tools (200) for shaping the wire portion in multiple stages to form a shaped part (W) with a shank portion (SA) and a head portion (KA) that is widened with respect to the shank portion;
an ejector system (300) for ejecting the fully formed shaped parts (W) in cycles,
**characterized by**
a pneumatic conveyor system (400) for transporting finished shaped parts (W) out of the work area, wherein the conveyor system (400) comprises a transporting pipe (410) with an insertion opening (412) for successively receiving finished shaped parts (W),
the insertion opening (412) is arranged in the vicinity of the ejector system (300) in such a way that the finished shaped parts (W) can be inserted into the insertion opening directly in a positionally oriented manner by means of the ejector system;
the ejector system (300) is configured, during the manufacturing operation, to insert finished shaped parts for take-up by the conveyor system (400) at least partially into the transporting pipe through the insertion opening in cycles; and
the conveyor system (400) is configured to suck up the shaped part taken up by the ejector system in the region of the inlet opening (412) and pneumatically convey it through the transporting pipe in the direction of a subsequent station.

8. System according to Claim 7, **characterized in that** the ejector system (300) has an ejector pin (320) that can be moved back and forth in time with the machine cycles, which ejector pin is configured to displace fully pressed shaped parts (W) respectively out of a die arranged in an ejector station in the direction of the transporting pipe (400), wherein the insertion opening (412) is mounted close to the ejector system in such a way that the finished shaped parts can be pushed directly into the insertion opening with the aid of the ejector pin (320).

9. System according to Claim 7 or 8, **characterized in that** the transporting pipe (410) is adapted to dimensions of the shaped part (W) in such a way that one or more of the following conditions apply:
(i) the transporting pipe has an inside diameter (D_{I}) which is smaller than a length (L) of the shaped parts (W);
(ii) the transporting pipe has an inside diameter (D_{I}) which is at most 20% larger, in particular at most 10% larger and/or at most 2 mm, in particular at most 1 mm larger than the outside diameter of the head portion;
(iii) the transporting pipe has an inside diameter (D_{I}) which is smaller than the sum of the outside diameter of the head portion (KA) and the shank portion (SA).

10. System according to one of Claims 7, 8 or 9, **characterized in that** the transporting pipe (410) forms a transport section which leads from the insertion opening (412) to a discharge opening in a transporting direction, wherein, at a distance downstream of the insertion opening, there is arranged a compressed-gas infeed device (450), which is preferably designed to introduce compressed gas at a positive pressure into the transporting pipe (410) parallel or at an acute angle to the transporting direction.

11. System according to Claim 10, **characterized in that** the distance is dimensioned such that one or more of the following conditions apply:
(i) the compressed-gas infeed device (450) is closer to the discharge opening than to the insertion opening (412);
(ii) the distance is in a range of 50% to 90% of the length between the insertion opening and the discharge opening;
(iii) the distance amounts to at least 750 mm, in particular to 1200 mm or more;
(iv) the distance is at least 50 times greater, in particular at least 100 times greater, than the inside diameter of the transporting pipe (410).

12. System according to one of Claims 7 to 11, **characterized in that**, to produce the shaped parts, use is made of a multi-stage press in the form of a double-pressure shaping press (100) with rotating dies.

13. System according to one of Claims 7 to 12, **characterized in that** one or more of the following subsequent stations is downstream of the conveyor system:
(i) a control station for quality control of the pressed parts;
(ii) a thread-rolling station for creating threads on the shank portion by way of thread rollers;
(iii) a pointing station for shaping the end faces;
(iv) a hardening station for hardening the formed pressed parts;
(v) an automatic assembly machine e.g. for chain manufacture;
(vi) a packing station for packing the pressed parts in suitable packaging for further distribution.

## Revendications

1. Procédé de fabrication de pièces formées (W) à partir de fil (D) au moyen d'une presse multi-étages (100), en particulier pour la fabrication de vis ou de rivets à partir de tronçons de fil, comprenant :
l'alimentation cadencée du fil (D) à partir d'une réserve de fil et le transport du fil vers un système de coupe (120) ;
la séparation cadencée de tronçons de fil (DA) du fil (D) amené par le système de coupe ;
la saisie d'un tronçon de fil (DA) séparé et l'amenée du tronçon de fil dans la zone de travail d'outils de formage (200) ;
la formation en plusieurs étapes du tronçon de fil en une pièce formée (W) avec une partie tige (SA) et une partie tête (KA) élargie par rapport à la partie tige, au moyen des outils de formage ;
l'éjection cadencée des pièces formées finies au moyen d'un système d'éjection (300) ;
le transport des pièces formées finies ;
**caractérisé par** les étapes suivantes :
prévoir un système de transport pneumatique (400) pour transporter les pièces formées finies, le système de transport comprenant un tube de transport (410) avec une ouverture d'introduction (412) pour recevoir successivement les pièces formées finies ;
disposer l'ouverture d'introduction (412) à proximité du système d'éjection (300) de telle sorte que les pièces formées finies puissent être introduites dans l'ouverture d'introduction (412) directement en fonction de leur position au moyen du système d'éjection ;
introduire successivement les pièces formées finies (W) dans le tube de transport (410) au moyen du système d'éjection pendant l'opération de fabrication ;
récupérer les pièces formées (W) introduites dans le tube de transport (410) par aspiration dans le tube de transport (410) ;
transporter pneumatiquement les pièces formées (W) aspirées à travers le tube de transport en direction d'un poste suivant.

2. Procédé selon la revendication 1, **caractérisé en ce que** le système d'éjection (300) présente une tige d'éjection (320) apte à être déplacée en va-et-vient à la cadence de la machine, qui fait avancer des pièces formées (W) entièrement pressées à partir d'une matrice disposée dans le poste d'éjection (300) ou à partir d'un préhenseur en direction du tube de transport (410), l'ouverture d'introduction (412) étant placée à proximité du système d'éjection de telle sorte que les pièces formées finies (W) soient directement introduites dans l'ouverture d'introduction au moyen de la tige d'éjection (320) .

3. Procédé selon la revendication 1 ou 2, **caractérisé en ce qu'**un tube de transport (410) adapté aux dimensions de la pièce formée (W) est utilisé, une ou plusieurs des conditions suivantes s'appliquant :
(i) le tube de transport présente un diamètre intérieur (D_{I}) qui est inférieur à une longueur (L) de la pièce formée (W) ;
(ii) le tube de transport présente un diamètre intérieur (D_{I}) qui est au maximum 20% plus grand, en particulier au maximum 10% plus grand, et/ou au maximum 2 mm, en particulier au maximum 1 mm, plus grand que le diamètre extérieur de la partie tête ;
(iii) le tube de transport présente un diamètre intérieur (D_{I}) qui est inférieur à la somme des diamètres extérieurs de la partie tête (KA) et de la partie tige (SA).

4. Procédé selon l'une des revendications 1, 2 ou 3, **caractérisé en ce que** le tube de transport (410) forme un chemin de transport qui, dans une direction de transport, mène de l'ouverture d'introduction (412) à une ouverture de décharge, un dispositif (450) d'injection de gaz sous pression étant disposé à distance derrière l'ouverture d'introduction, lequel est de préférence conçu pour introduire du gaz sous pression en surpression dans le tube de transport (410) parallèlement à la direction de transport ou en formant un angle aigu avec celle-ci.

5. Procédé selon la revendication 4, **caractérisé en ce que** la distance est dimensionnée de telle sorte qu'une ou plusieurs des conditions suivantes s'appliquent :
(i) le dispositif d'injection de gaz sous pression est plus proche de l'ouverture de décharge que de l'ouverture d'introduction ;
(ii) la distance est comprise entre 50% et 90% de la longueur entre l'ouverture d'introduction et l'ouverture de décharge ;
(iii) la distance est d'au moins 750 mm, en particulier de 1200 mm ou plus ;
(iv) la distance est au moins 50 fois, en particulier au moins 100 fois, le diamètre intérieur du tube de transport.

6. Procédé selon l'une des revendications précédentes, **caractérisé en ce que**, pour la fabrication des pièces formées, on utilise une presse multi-étages sous la forme d'une presse de formage à double pression (100) avec des matrices rotatives.

7. Système de fabrication de pièces formées (W) à partir de fil, en particulier pour la fabrication de vis ou de rivets à partir de tronçons de fil, ayant au moins une presse multi-étages, comprenant :
un système d'alimentation (110) pour l'alimentation cadencée de fil (D) à partir d'une réserve de fil et pour le transport du fil vers un système de coupe (120) ;
un système de coupe (120) pour séparer de façon cadencée des tronçons de fil (DA) du fil (D) amené ;
un système d'amenée (130) pour respectivement saisir un tronçon de fil (DA) séparé et pour amener le tronçon de fil dans la zone de travail d'outils de formage (200) de la machine de formage de fil ;
plusieurs postes de formage avec des outils de formage (200) pour le formage en plusieurs étapes du tronçon de fil en une pièce formée (W) avec une partie tige (SA) et une partie tête (KA) qui est élargie par rapport à la partie tige ;
un système d'éjection (300) pour l'éjection cadencée des pièces formées finies (W), **caractérisé par** un système de transport pneumatique (400) pour transporter les pièces formées finies (W) depuis la zone de travail, le système de transport (400) comprenant un tube de transport (410) avec une ouverture d'introduction (412) pour recevoir successivement les pièces formées finies (W),
l'ouverture d'introduction (412) est disposée à proximité du système d'éjection (300) de telle sorte que les pièces formées finies (W) sont aptes à être introduites dans l'ouverture d'introduction au moyen du système d'éjection en étant directement orientées en position ;
le système d'éjection (300) est configuré pour, pendant l'opération de fabrication, introduire au moins partiellement des pièces formées finies à travers l'ouverture d'introduction dans le tube de transport, de manière cadencée, en vue de leur prise en charge par le système de transport (400) ; et
le système de transport (400) est configuré pour aspirer la pièce formée récupérée par le système d'éjection au niveau de l'ouverture d'introduction (412) et pour la transporter pneumatiquement à travers le tube de transport en direction d'un poste suivant.

8. Système selon la revendication 7, **caractérisé en ce que** le système d'éjection (300) présente une tige d'éjection (320) apte à être déplacée en va-et-vient à la cadence de la machine, qui est configurée pour faire avancer des pièces formées finies (W) respectivement à partir d'une matrice disposée dans un poste d'éjection, en direction du tube de transport (400), l'ouverture d'introduction (412) étant montée à proximité du système d'éjection de telle sorte que les pièces formées finies soient aptes à être poussées directement dans l'ouverture d'introduction à l'aide de la tige d'éjection (320).

9. Système selon la revendication 7 ou 8, **caractérisé en ce que** le tube de transport (410) est adapté aux dimensions de la pièce formée (W) de telle sorte qu'une ou plusieurs des conditions suivantes s'appliquent :
(i) le tube de transport présente un diamètre intérieur (D_{I}) qui est inférieur à une longueur (L) de la pièce formée (W) ;
(ii) le tube de transport présente un diamètre intérieur (D_{I}) qui est au maximum 20% plus grand, en particulier au maximum 10% plus grand, et/ou au maximum 2 mm, en particulier au maximum 1 mm, plus grand que le diamètre extérieur de la partie tête ;
(iii) le tube de transport présente un diamètre intérieur (D_{I}) qui est inférieur à la somme des diamètres extérieurs de la partie tête (KA) et de la partie tige (SA).

10. Système selon l'une des revendications 7, 8 ou 9, **caractérisé en ce que** le tube de transport (410) forme un chemin de transport qui, dans une direction de transport, mène de l'ouverture d'introduction (412) à une ouverture de décharge, un dispositif (450) d'injection de gaz sous pression étant disposé à distance derrière l'ouverture d'introduction, lequel est de préférence conçu pour introduire du gaz sous pression en surpression dans le tube de transport (410) parallèlement à la direction de transport ou en formant un angle aigu avec celle-ci.

11. Système selon la revendication 10, **caractérisé en ce que** la distance est dimensionnée de telle sorte qu'une ou plusieurs des conditions suivantes s'appliquent :
(i) le dispositif (450) d'injection de gaz sous pression est plus proche de l'ouverture de décharge que de l'ouverture d'introduction (412) ;
(ii) la distance est comprise entre 50% et 90% de la longueur entre l'ouverture d'introduction et l'ouverture de décharge ;
(iii) la distance est d'au moins 750 mm, en particulier de 1200 mm ou plus ;
(iv) la distance est au moins 50 fois, en particulier au moins 100 fois, le diamètre intérieur du tube de transport (410).

12. Système selon l'une des revendications 7 à 11, **caractérisé en ce que**, pour la fabrication des pièces formées, on utilise une presse multi-étages sous la forme d'une presse de formage à double pression (100) avec des matrices rotatives.

13. Système selon l'une des revendications 7 à 12, **caractérisé en ce qu'**un ou plusieurs des postes ultérieurs suivants sont montés en aval du système de transport :
(i) une station de contrôle pour le contrôle de la qualité des pièces pressées ;
(ii) une station de roulage de filets pour produire des filets sur le partie tige par roulage de filets ;
(iii) une station de couplage pour le formage sur les faces d'extrémité ;
(iv) une station de durcissement pour durcir les pièces pressées formées ;
(v) une machine d'assemblage automatique, par exemple pour la fabrication de chaînes ;
(vi) une station d'emballage pour emballer les pièces pressées dans des emballages appropriés en vue de leur distribution ultérieure.
